# EUROPÄISCHE PATENTANMELDUNG

(11) **EP 2 538 071 A2**
(43) Veröffentlichungstag der Anmeldung: **26.12.2012**
(21) Anmeldenummer: 12172669.9
(22) Anmeldetag: 20.06.2012
(51) Int. Cl.: F03B 7/00, F03B 15/02

(54) **Fliesswasser-Kompressions-Turbine**

(30) Priorität: 21.06.2011 AT 3472011 U
(71) Anmelder: Hänfling, Manfred, 3100 St. Pölten (AT)
(72) Erfinder: Hänfling, Manfred, 3100 St. Pölten (AT)
(74) Vertreter: Babeluk, Michael

(57) **Zusammenfassung**

Die Erfindung betrifft eine Wasserkraftmaschine mit einem im Wesentlichen zylindrischen Laufrad (1), das in einem Strömungskanal (4) angeordnet ist, der aus einer im Wesentlichen ebenen unteren Strömungsleitfläche (2) und einer Abdeckung (3) besteht. Ein verbesserter Wirkungsgrad kann dadurch erreicht werden, dass im Strömungskanal (4) stromaufwärts des Laufrads (1) eine erste Strömungsleitfläche (9) angeordnet ist, die den Strömungsquerschnitt zum Laufrad (1) hin verengt und beim Laufrad (1) einen Durchströmquerschnitt auf den Bereich der unteren Strömungsleitfläche (2) begrenzt, und dass an der stromaufwärtigen Seite der Strömungsleitfläche (9) eine schwenkbare Klappe (13) vorgesehen ist, die einen veränderlichen Zuströmquerschnitt (14) freigibt.

## Beschreibung

Die Erfindung betrifft eine Wasserkraftmaschine gemäß dem Oberbegriff von Patentanspruch 1. Insbesondere ist eine Maschine mit einem im Wesentlichen zylindrischen Laufrad vorgesehen, das in einem Strömungskanal angeordnet ist, der aus einer im wesentlichen ebenen unteren Strömungsleitfläche und einer Abdeckung besteht.

Es sind unterschiedliche Konstruktionsprinzipien für Wasserkraftmaschinen bekannt, so werden etwa Kaplanturbinen typischerweise in Axialrichtung des Laufrades angeströmt. Die vorliegende Erfindung betrifft jedoch eine Wasserkraftmaschine, bei der das Laufrad im Wesentlichen zylindrisch ausgebildet ist, und quer zur Achse angeströmt wird. Solche Wasserkraftmaschinen sind beispielsweise aus der DE 2 719 651 A oder der WO 2006/063833 A bekannt. Wasserkraftmaschinen dieser Art sind durchaus gut zur Gewinnung von Energie geeignet, um beispielsweise Generatoren zur Stromerzeugung anzutreiben. Der effiziente Einsatz solcher bekannten Wasserkraftmaschinen setzt jedoch stets besondere Einbaubedingungen voraus, die sicherstellen, dass eine optimale Anströmung gegeben ist. Problematisch ist dabei in der Regel, dass natürliche Wasserläufe in Abhängigkeit von den Wetterbedingungen u. dgl. eine stark unterschiedliche Wasserführung aufweisen können. Dies bewirkt nicht nur eine sehr schwankende Energieausbeute, sondern erzwingt auch, dass spezielle Maßnahmen wie Überläufe oder dgl. geschaffen werden, um bei starker Wasserführung eine Zerstörung der Wasserkraftmaschine oder eine Überflutung zu vermeiden.

Im Wesentlichen eben soll in Bezug auf die Strömungsleitfläche bedeuten, dass eine eventuelle Krümmung jedenfalls größer ist als die Krümmung der Umhüllenden des Laufrads.

Aufgabe der vorliegenden Erfindung ist es, diese Nachteile zu vermeiden, und eine Lösung für eine Wasserkraftmaschine anzugeben, die mit geringstmöglichem Aufwand in bestehende Fließgewässer eingesetzt werden kann und die auch an stark unterschiedliche Strömungsverhältnisse leicht anpassbar ist.

Erfindungsgemäß werden diese Aufgaben dadurch gelöst, dass im Strömungskanal stromaufwärts des Laufrads eine erste Strömungsleitfläche angeordnet ist, die den Strömungsquerschnitt zum Laufrad hin verengt und beim Laufrad einen Durchströmquerschnitt auf den Bereich der unteren Strömungsleitfläche begrenzt, und dass an der stromaufwärtigen Seite der Strömungsleitfläche eine schwenkbare Klappe vorgesehen ist, die einen veränderlichen Zuströmquerschnitt freigibt.

Eine typische Anordnung der erfindungsgemäßen Wasserkraftmaschine ist die eines Kleinkraftwerks, das in einem Fließgewässer, also einem Bach oder einem Fluss angeordnet ist, wobei der Strömungsquerschnitt im Bereich der Wasserkraftmaschine im Wesentlichen rechteckig ist.

Wesentlich an der vorliegenden Erfindung ist, dass die Wasserkraftmaschine bei starker Wasserführung von frei fließendem Wasser überströmt ist und keinen nennenswerten Widerstand bietet, bzw. nicht separat hergestellte Hochwasserschutzmassnahmen benötigt. Die schwenkbare Klappe kann so bemessen sein, dass bei geringerer Wasserführung der gesamte Massenstrom durch die Wasserkraftmaschine hindurchströmt oder aber auch so, das stets ein gewisser Anteil des strömenden Wassers über die Wasserkraftmaschine hinwegströmt, so dass diese stets unauffällig unter der Wasseroberfläche verborgen bleibt. In einem solchen Fall ist es dann auch möglich, dass Fische die Wasserkraftmaschine jederzeit problemlos passieren können.

Durch die schwenkbare Klappe kann ein gewisser Aufstau erzeugt werden, der umso größer ist, je steiler die Klappe nach oben gerichtet ist. Diese Aufstauwirkung führt dazu, dass der Druck am Laufrad ansteigt, sodass auch die Drehzahl und damit die Strömungsmenge erhöht werden kann, wenn dies gewünscht ist.

Es ist besonders bevorzugt, wenn die schwenkbare Klappe zwischen einer ersten Stellung und einer zweiten Stellung beweglich ist, wobei der Zuströmquerschnitt in der ersten Stellung der schwenkbaren Klappe mindestens doppelt so groß ist wie Durchströmquerschnitt. Die schräg nach oben gerichtete Klappe bewirkt in der ersten Stellung dabei einerseits einen Aufstau des Gewässers, wodurch der Druck erhöht wird, was das Drehmoment am Laufrad steigert, und andererseits eine Erhöhung der Strömungsgeschwindigkeit im konvergenten Teil des Strömungskanals. Auch dies dient der Leistungssteigerung. Wenn bei hoher Wasserführung ein Aufstau nicht erwünscht oder kontraproduktiv ist, kann die Klappe abgesenkt werden, um so Gefährdungen zu vermeiden.

Besonders günstig ist es wenn, die schwenkbare Klappe an einer stromaufwärtigen Kante der Strömungsleitfläche schwenkbar angelenkt ist. Dadurch kann ein kompakter Aufbau erreicht werden und es kann ein hoher Wirkungsgrad dargestellt werden.

In einer besonders begünstigten Ausführungsvariante der vorliegenden Erfindung ist vorgesehen, dass im Strömungskanal stromabwärts des Laufrads eine zweite Strömungsleitfläche angeordnet ist, die den Strömungsquerschnitt in Strömungsrichtung erweitert. Diese zweite Strömungsfläche ist nach Art eines Diffusors mit sich erweiterndem Strömungsquerschnitt ausgebildet, so dass am Laufrad eine Saugwirkung erzielt wird, die leistungssteigernd wirkt. In diesem Zusammenhang ist es von besonderem Vorteil, wenn die zweite Strömungsleitfläche eine stromaufwärtige Kante aufweist, die im Bereich des Laufrads angeordnet ist, und einen Abstand zur unteren Strömungsleitfläche aufweist, der etwa dem Radius des Laufrads entspricht.

Der Strömungswiderstand kann dadurch minimiert werden, dass oberhalb des Laufrads eine im Wesentlichen ebene Überströmungsfläche vorgesehen ist, die an einer stromaufwärtigen Kante mit der ersten Strömungsleitfläche fest verbunden ist.

Es kann auch eine schwenkbare Klappe stromabwärts des Laufrads vorgesehen sein, dies dient einerseits zur Regulierung und andererseits kann dadurch der Bereich des Laufrads vollständig abgeschlossen werden, wenn dies erwünscht ist.

Für besonders vorteilhaft hat es sich herausgestellt, wenn der Durchströmquerschnitt eine Höhe aufweist, die zwischen 40% und 70%, vorzugsweise zwischen 45% und 55% des Durchmessers des Laufrads liegt. Eine weitere Erhöhung des Wirkungsgrads kann dadurch erreicht werden, dass das Laufrad oberhalb des Durchströmquerschnitts durch eine unmittelbar anliegende halbzylindrische Schale abgedeckt ist. Die Länge der schwenkbaren Klappe soll etwas größer sein, als der Durchmesser des Laufrads und kann in besonders begünstigter Weise bis zum vierfachen Durchmesser des Laufrads gesteigert werden.

Ein besonders ruhiger Lauf kann dadurch erreicht werden, dass die Schaufeln des Laufrads schraubenförmig verdreht sind.

Als weiters vorteilhaft in Hinblick auf den Wirkungsgrad hat es sich herausgestellt, wenn die Schaufeln des Laufrads an ihren außenseitigen Kanten sich in Umfangsrichtung erstreckende Vorsprünge aufweisen.

In der Folge wird die Erfindung anhand der in den Figuren dargestellten Ausführungsvariante näher erläutert.

Es zeigen schematisch:
- Fig. 1: eine axonometrische Darstellung des Laufrads einer erfindungsgemäßen Wasserkraftmaschine;
- Fig. 2: eine Wasserkraftmaschine entsprechend der Erfindung in einem Schnitt;
- Fig. 3: einen Querschnitt durch das Laufrad;
- Fig. 4: einen Schnitt eine Wasserkraftmaschine im Einbauzustand.

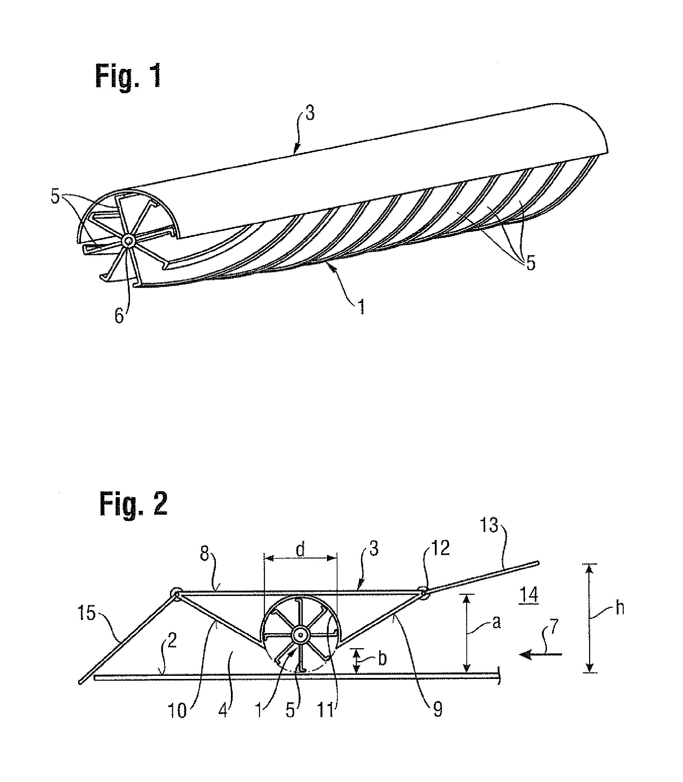

Die Wasserkraftmaschine besteht gemäß Fig. 1 zunächst grundsätzlich aus einem Laufrad 1, das oberhalb einer unteren Strömungsleitfläche 2 angeordnet ist und oberhalb eine Abdeckung 3 aufweist. Zwischen der unteren Strömungsleitfläche 2 und der Abdeckung 3 ist ein Strömungskanal 4 ausgebildet.

Aus Fig. 1 ist ersichtlich, dass das Laufrad 1, Schaufeln 5 aufweist, die radial von einer Nabe 6 abstehen und im Wesentlichen schraubenförmig ausgebildet sind. Die Schaufeln 5 des Laufrads 1 sind im Wesentlichen eben, was bedeutet, dass sie im Querschnitt gerade sind und lediglich durch die schraubenförmige Verdrehung eine dreidimensionale Krümmung in geringem Ausmaß erhalten.

Das Laufrad von Fig. 1 ist relativ stark verdreht. In der Regel genügt es, wenn die schraubenförmige Verdrehung über die Gesamtlänge des Laufrads 1 in Axialrichtung ein bis drei Teilungen der Schaufeln 5 ausmacht, um unerwünschte Pulsationen zu vermeiden.

In Fig. 2 ist die Wasserkraftmaschine gemäß der vorliegenden Anmeldung insgesamt dargestellt. In dieser Darstellung wird davon ausgegangen, dass die Wasserströmung in Richtung des Pfeils 7 erfolgt. Ein Vorteil der vorliegenden Erfindung liegt jedoch darin, dass die Wasserkraftmaschine grundsätzlich auch dazu geeignet ist, bei wechselnden Strömungsrichtungen ordnungsgemäß zu funktionieren, beispielsweise in Situationen, in denen Gezeitenströmungen in unterschiedlicher Richtung auftreten. Die Abdeckung 3 des Laufrads 1 besteht aus einer ebenen Überströmungsfläche 8, einer ersten Strömungsleitfläche 9 und einer zweiten Strömungsleitfläche 10. Die erste Strömungsleitfläche 9 ist stromaufwärts des Laufrads 1 angeordnet, während die zweite Strömungsleitfläche 10 stromabwärts angeordnet ist. Die beiden Strömungsleitflächen 9, 10 sind im Bereich des Laufrads 1 durch eine halbzylindrische Schale 11 verbunden, die im Wesentlichen der Kontur des Laufrads 1 folgt. Die erste Strömungsleitfläche 9 ist dabei in Strömungsrichtung konvergent, während die zweite Strömungsleitfläche 10 divergent ist. Dies bedeutet, dass die erste Strömungsleitfläche 9 von einer stromaufwärtigen Kante 12, die zur unteren Strömungsleitfläche 2 einen Abstand a aufweist, der etwa dem Durchmesser d des Laufrades 1 entspricht, bis auf eine Entfernung b zur unteren Strömungsleitfläche 2 nahe kommt, die etwa 45% des Durchmessers des Laufrads entspricht. Die zweite Strömungsleitfläche 10 entfernt sich in analoger Weise ausgehend vom Laufrad 1, um einen Diffusor zu bilden. An der stromaufwärtigen Kante 12 der ersten Strömungsleitfläche 9 ist eine schwenkbare Klappe 13 angebracht, die an Ihrer stromaufwärtigen Seite einen Zuströmquerschnitt 14 frei gibt, dessen Höhe h beispielsweise dem doppelten Durchmesser d des Laufrads 1 entsprechen kann. In analoger Weise ist an der stromabwärtigen Seite des Laufrads 1 eine weitere schwenkbare Klappe 15 angeordnet, die ebenfalls den Durchströmquerschnitt verändern kann. Die schwenkbare Klappe 13 ist typischerweise aktiv angetrieben, um die Wasserkraftmaschine zu regeln. Die weitere Klappe 15 kann auch passiv beispielsweise durch Federkraft in einer gewünschten Stellung gehalten werden.

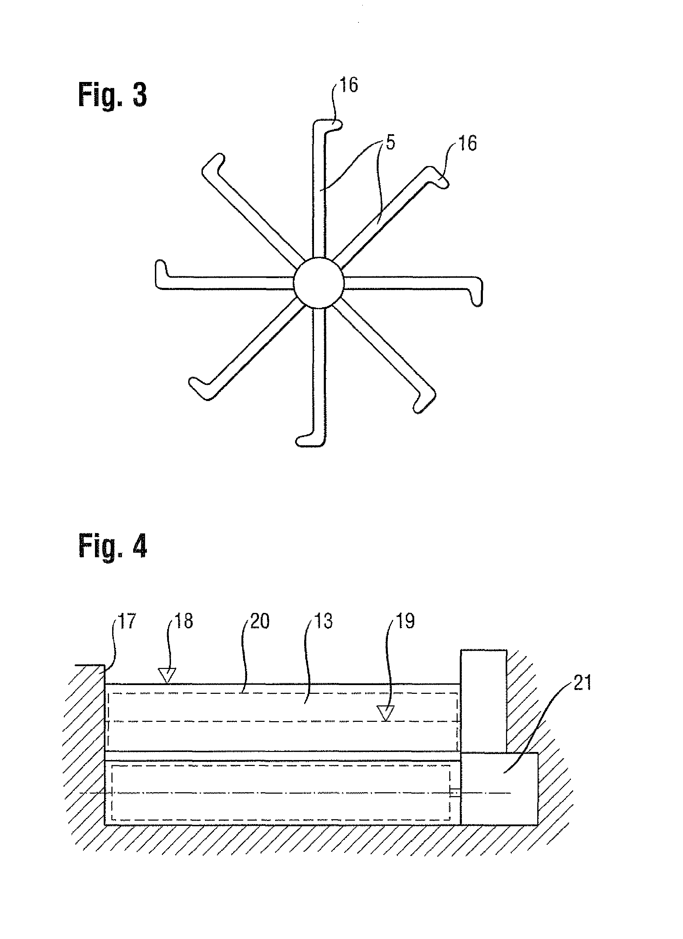

Aus Fig. 3 ist ersichtlich, dass das Laufrad 1 an den Enden seiner Schaufeln 5 Vorsprünge 16 aufweist, die dazu dienen das Strömungsverhalten zu verbessern.

Fig. 4 zeigt eine typische Einbausituation einer erfindungsgemäßen Wasserkraftmaschine in einem Flussbett 17, wobei das Laufrad 1 mit unterbrochenen Linien angedeutet ist, mit 18 ist der Wasserstand stromaufwärts des Wasserkraftwerks bezeichnet, und mit 19 der Wasserstand stromabwärts davon. Es ist außerdem ersichtlich, dass der Wasserstand stromaufwärts der Wasserkraftmaschine etwas höher ist als die Oberkante 20 der schwenkbaren Klappe 13, d.h. dass eine Teilmenge des anströmenden Wassers über die Abdeckung 3 hinwegströmt, so dass die Konstruktion optisch wenig auffällig ist. Weiters ist in Axialrichtung des Laufrads 1 ein Generator 21 angedeutet, der zur Stromerzeugung dient.

Die vorliegende Erfindung ermöglicht es, ein Wasserkraftwerk mit einfachen Mitteln so anzuordnen, dass eine Anpassung an unterschiedliche Strömungsverhältnisse leicht möglich ist.

## Patentansprüche

1. Wasserkraftmaschine mit einem im Wesentlichen zylindrischen Laufrad (1), das in einem Strömungskanal (4) angeordnet ist, der aus einer im Wesentlichen ebenen unteren Strömungsleitfläche (2) und einer Abdeckung (3) besteht, **dadurch gekennzeichnet, dass** im Strömungskanal (4) stromaufwärts des Laufrads (1) eine erste Strömungsleitfläche (9) angeordnet ist, die den Strömungsquerschnitt zum Laufrad (1) hin verengt und beim Laufrad (1) einen Durchströmquerschnitt auf den Bereich der unteren Strömungsleitfläche (2) begrenzt, und dass an der stromaufwärtigen Seite der Strömungsleitfläche (9) eine schwenkbare Klappe (13) vorgesehen ist, die einen veränderlichen Zuströmquerschnitt (14) freigibt.

2. Wasserkraftmaschine nach Anspruch 1, **dadurch gekennzeichnet, dass** die schwenkbare Klappe (13) zwischen einer ersten Stellung und einer zweiten Stellung beweglich ist, wobei der Zuströmquerschnitt (14) in der ersten Stellung der schwenkbaren Klappe (13) mindestens doppelt so groß ist wie der Durchströmquerschnitt.

3. Wasserkraftmaschine nach Anspruch 1 oder 2, **dadurch gekennzeichnet, dass** die schwenkbare Klappe (13) an einer stromaufwärtigen Kante (12) der Strömungsleitfläche (9) schwenkbar angelenkt ist.

4. Wasserkraftmaschine nach einem der Ansprüche 1 bis 3, **dadurch gekennzeichnet, dass** im Strömungskanal (4) stromabwärts des Laufrads (1) eine zweite Strömungsleitfläche (10) angeordnet ist, die den Strömungsquerschnitt in Strömungsrichtung (7) erweitert.

5. Wasserkraftmaschine nach Anspruch 4, **dadurch gekennzeichnet, dass** die zweite Strömungsleitfläche (10) eine stromaufwärtige Kante aufweist, die im Bereich des Laufrads (1) angeordnet ist und einen Abstand zur unteren Strömungsleitfläche aufweist, der etwa dem halben Durchmesser d des Laufrads (1) entspricht.

6. Wasserkraftmaschine nach einem der Ansprüche 1 bis 5, **dadurch gekennzeichnet, dass** oberhalb des Laufrads (1) eine im Wesentlichen ebene Überströmungsfläche (8) vorgesehen ist, die an einer stromaufwärtigen Kante (12) mit der ersten Strömungsleitfläche (9) fest verbunden ist.

7. Wasserkraftmaschine nach einem der Ansprüche 1 bis 6, **dadurch gekennzeichnet, dass** eine weitere schwenkbare Klappe (15) stromabwärts des Laufrads vorgesehen ist.

8. Wasserkraftmaschine nach einem der Ansprüche 1 bis 7, **dadurch gekennzeichnet, dass** der Durchströmquerschnitt eine Höhe aufweist, die zwischen 40% und 70%, vorzugsweise zwischen 45% und 55% des Durchmessers d des Laufrads (1) liegt.

9. Wasserkraftmaschine nach einem der Ansprüche 1 bis 8, **dadurch gekennzeichnet, dass** das Laufrad (1) oberhalb des Durchströmquerschnitts durch eine unmittelbar anliegende halbzylindrische Schale (11) abgedeckt ist.

10. Wasserkraftmaschine nach einem der Ansprüche 1 bis 9, **dadurch gekennzeichnet, dass** die Länge der schwenkbaren Klappe (13) zwischen 150% des Durchmessers d und dem vierfachen Durchmesser d des Laufrads (1) ausmacht.

11. Wasserkraftmaschine nach einem der Ansprüche 1 bis 10, **dadurch gekennzeichnet, dass** die Schaufeln (5) des Laufrads (1) schraubenförmig verdreht sind.

12. Wasserkraftmaschine nach einem der Ansprüche 1 bis 11, **dadurch gekennzeichnet, dass** die Schaufeln (5) des Laufrads (1) an ihren außenseitigen Kanten sich in Umfangsrichtung erstreckende Vorsprünge (16) aufweisen.

13. Wasserkraftmaschine nach einem der Ansprüche 1 bis 12, **dadurch gekennzeichnet, dass** das Laufrad (1) quer zur Strömungsrichtung (7) angeordnet ist.

14. Wasserkraftmaschine nach einem der Ansprüche 1 bis 13, **dadurch gekennzeichnet, dass** die Schaufeln (5) des Laufrads (1) im Wesentlichen eben sind.
